Europäisches Patentamt

European Patent Office

Office européen des brevets

(19)

(11) Veröffentlichungsnummer : **0 306 805 B1**

## EUROPÄISCHE PATENTSCHRIFT

(12)

(45) Veröffentlichungstag der Patentschrift :
03.07.91 Patentblatt 91/27

(51) Int. Cl.⁵ : **C09K 21/02, C09D 5/18**

(21) Anmeldenummer : 88114111.3

(22) Anmeldetag : 30.08.88

(54) Brandschutzmittel.

Die Akte enthält technische Angaben, die nach dem Eingang der Anmeldung eingereicht wurden und die nicht in dieser Patentschrift enthalten sind.

(30) Priorität : 09.09.87 DE 3730204

(43) Veröffentlichungstag der Anmeldung :
15.03.89 Patentblatt 89/11

(45) Bekanntmachung des Hinweises auf die Patenterteilung :
03.07.91 Patentblatt 91/27

(84) Benannte Vertragsstaaten :
BE CH DE FR GB LI NL SE

(56) Entgegenhaltungen :
EP-A- 0 135 261
DE-A- 2 339 722
US-A- 4 126 473

(73) Patentinhaber : BAYER AG
W-5090 Leverkusen 1 Bayerwerk (DE)

(72) Erfinder : Von Bonin, Wulf, Dr.
Droste-Hülshoff-Strasse 9
W-5068 Odenthal (DE)

EP 0 306 805 B1

## Beschreibung

Die vorliegende Erfindung betrifft Aluminiumhydroxid enhaltende Brandschutzmittel, deren Herstellung und Verwendung, sowie diese enthaltende Halbzeuge und Fertigteile.

Bekannte Brandschutzmittel enthalten normalerweise Bindemittel (z.B. Zement, Gips oder Kunststoffe) hydratisierte Füllstoffe (z.B. Aluminiumhydroxid), Zusatzstoffe (z.B. Melaminderivate, Phosphorverbindungen und/oder nicht-hydratisierte Füllstoffe), und gegebenenfalls Hilfsstoffe der verschiedensten Art (z.B. Fließhilfsmittel und/oder Pigmente). Nachteilig bei derartigen Brandschuutzmitteln ist, daß sie entweder grundsätzlich schlecht oder erst bei hohen Temperaturen (z.B. über 1.000°C) keramisieren oder sintern. Dadurch gibt es im Brandfall häufig Temperaturbereiche, bei denen der mechanische Schutz gegen Flammen und Löschwasser unzureichend ist. Zusätze von Alkali enthaltenden Substanzen verbessern z.B. das Sinterverhalten von Aluminiumhydroxid, jedoch sind solche Zusätze gut wasserlöslich und deshalb in Brandschutzmitteln nicht zu gebrauchen.

Die EP-A 0 135 261 beschreibt Intumeszenzmassen, die ein Alkalimetallsilikat, wenigstens ein Borat, Wasser und gegebenenfalls Aluminiumoxidtrihydrat, jedoch keine Copolymere des Ethylens enthalten.

Die DE-A 2 339 722 beschreibt Gummi- und Kunststoffmassen mit flammwidrigen Zusätzen und einem Gehalt an Calcium- und Boratradikalen, die auch Aluminium-trihydrat enthalten können. Als Kunststoffmassen kommen solche aus der Gruppe Polyvinylchlorid, Polyolefine, Polyurethane, Polyester und Polyester-/Polyamid, nicht jedoch Copolymere des Ethylens in Frage.

Die US-A 4 126 473 beschreibt Platten auf Zellulosebasis, die als flammwidrige Ausstattung eine Kombination aus aluminösem Material, einem natürliches Bor entlaltendem Mineral und einem Phosphat- oder Sulfatsalz enthalten.

Es wurden nun Aluminiumlydroxid entlaltende Brandschutzmittel gefunden, die dadurch gekennzeichnet sind, daß sie zusätzlich natürliches und/oder naturähnliches Calciumborat und Copolymere des Ethylens mit Acrylaten oder Vinylestern enthalten.

Als Aluminiumhydroxid kommen z.B. Al(OH)$_3$, dessen Hydrate, partiell dehydratisierte Typen und Aluminiumoxidhydrate in Frage. Es können auch beliebige Gemische dieser Stoffe eingesetzt werden. Bevorzugt ist Al(OH)$_3$.

Als natürliche Calciumborate kommen beispielsweise solche in Frage, die außer Bor, Calcium, Sauerstoff und gegebenenfalls Kristallwasser keine weiteren Bestandteile enthalten, wie Colemanit, Fabianit, Frolovit, Borocalcit, Ginorit, Gowerit, Inyoit, Korzhinskit, Meyerhofferit, Nobleit, Nifontovit, Pandernit, Pentahydroborit, Priceit, Sibirskit, Tertschit, Uralborit oder Vimsit. Als natürliche Calciumborate kommen auch solche in Frage, die neben Bor, Calcium, Sauerstoff und gegebenenfalls Kristallwasser noch weitere Bestandteile enthalten, beispielsweise weitere Metalle, insbesondere Alkalimetalle, Erdalkalimetalle, Aluminium, Silicium und/oder Eisen und-/oder weitere Nichtmetalle beispielsweise Chlor, wie Aldzhanit, Axinit, Bakerit, Borkarit, Braitschit, Calciborit, Chelkarit, Danburit, Datolith, Franklandit, Heidornit, Hilgardit, Hydroboracit, Tincalcit, Inderborit, Hatriumborocalcit, p-Hilgardit, Probertit, Sakhait, Solongoit, Ulexit oder Volkovit.

Solche Borate sind z.B. genannt in Gmelin Handbuch der anorganischen Chemie oder Hollemann-Wiberg, Lehrbuch der anorganischen Chemie.

Vorzugsweise werden solche Ca-Borate verwendet, die in der Lage sind, bei Temperaturen über 100°C Wasser abzuspalten, wie z.B. Colemanit, Borocalcit, Pandermit, da deshalb deren Brandschutzwirkung mit der des Al(OH)$_3$ vergleichbar ist und diese synergistisch ergänzt.

Als naturähnliche Calciumborate kommen beispielsweise aufbereitete natürliche Calciumborate in Frage, insbesondere Produkte, die durch Trocknung und/oder Abtrennung von Verunreinigungen aus natürlichen Calciumboraten erhalten werden. Naturähnliche Calciumborate sind aber auch solche, die technisch hergestellt wurden und in ihrer chemischen Zusammensetzung natürlichen Calciumboraten entsprechen.

Selbstverständlich kann auch ein Gemisch aus zwei oder mehreren natürlichen und/oder naturähnlichen Calciumboraten vorliegen.

Bevorzugt sind natürliche Calciumborate, die außer Bor, Calcium, Sauerstoff und gegebenenfalls Kristallwasser, bzw. Hydratwasser, keine weiteren Bestandteile enthalten, insbesondere das Mineral Colemanit.

Das Verhältnis von Aluminiumhydroxid zu Calciumborat kann beispielsweise so sein, daß 25 bis 70 Gew.-% Aluminiumhydroxid, bezogen auf das Gewicht von Aluminiumhydroxid + Calciumborat, vorhanden sind. Vorzugsweise sind 35 bis 60 Gew.-%. Aluminiumhydroxid, bezogen auf das Gewicht von Aluminiumhydroxid + Calciumborat vorhanden.

Das Aluminiumhydroxid und das Calciumborat liegen im allgemeinen in feinverteilter Form vor. Vorzugsweise beträgt deren mittlere Korngröße unter 60 µm, besonders bevorzugt zwischen 1 und 25 µm. Aluminiumhydroxid und Calciumborat können eine gleiche oder eine verschiedene mittlere Korngröße aufweisen.

Gegebenenfalls können das Aluminiumhydroxid und das Calciumborat gemeinsam auf die jeweils gewünschte Korngröße vermahlen werden.

Erfindungsgemäße Brandschutzmittel enthalten außer Aluminiumhydroxid und natürlichem und/oder naturähnlichem Calciumborat Copolymere des Ethylens mit Acrylaten oder Vinylestern – z.B. Vinylacetat – als Bindemittel.

Es kann ein Bindemittel eingesetzt werden, aber auch Gemische vorzugsweise aber nicht notwendigerweise untereinander verträglicher Bindemittel.

Bezogen auf das Gewicht von Aluminiumhydroxid + Calciumborat + Bindemittel können beispielsweise 1 bis 80% Bindemittel vorhanden sein. Vorzugsweise beträgt diese Menge 20 bis 70%.

Eine Variante erfindungsgemäßer Brandschutzmittel enthält zusätzlich Hilfsstoffe. Bei den Hilfsstoffen kann es sich beispielsweise um Füllstoffe in Pulver-, Kugel-, Hohlkugel-, Blättchen-, Nadel-, Hantel- oder Faserform (letztere auch in Form von Gelegen, Gestricken, Geweben oder Gewirken), Farbgeber, Duftstoffe, Rheologiehilfsmittel, Biocide, Weichmacher, Lösungsmittel, Antistatika, Hydrophobierungsmittel, Tenside, Treibmittel, Klebemittel, Stabilisatoren (z.B. gegen atmosphärische Einflüsse, Licht und/oder andere Strahlungen) und/oder Leitfähigkeitsvermittler handeln. Beispiele für derartige Hilfsstoffe sind Kreide, Magnesiumoxid, Magnesiumhydroxid, Dolomit, Gesteinsmehl, Silikate, Flugasche, Kieselsäuren, Glimmer, Talkum, Zinkborat, Graphit, blähfähiger Graphit, Ruß, Holzmehl, Polypropylen, Polyester, aliphatische Polyamide, aromatische Polyamide, Polyimide, Polyacrylnitril, Cellulose, Kohlenstoff, Glas, Kaolin, Eisen, Kupfer, Silber und Asbest.

Die Hilfsstoffe können, bezogen auf das Gewicht von Aluminiumhydroxid + Calciumborat, beispielsweise in einer Menge von 0 bis 30% vorliegen. Vorzugsweise beträgt diese Menge 0,5 bis 20%.

Beispielhafte Anwendungen für erfindungsgemäße Brandschutzmittel sind Kitte, Zemente, Dichtungsmassen, Gießmassen, Preßmassen, Beschichtungsmassen, Lackbindemittel, Konstruktionselemente, Formteile, Hohlraumfüllungen und Halbzeuge, die erfindungsgemäße Brandschutzmittel enthalten oder daraus bestehen. Bei den vorgenannten Anwendungsbeispielen kann insgesamt betrachtet eine massive, poröse oder schaumartige Struktur ausgebildet sein.

Die vorliegende Erfindung betrifft auch die Herstellung von Brandschutzmitteln, die dadurch gekennzeichnet ist, daß man Aluminiumhydroxid, natürliches und/oder naturähnliches Calciumborat, Copolymere des Ethylens mit Acrylaten oder Vinylestern und gegebenenfalls Hilfsstoffe miteinander vermischt. Die einzelnen Komponenten können nach Art und Menge so sein wie oben detailliert beschrieben. Während oder nach dem Vermischen können zwangsläufige oder bewußt herbeigeführte chemische und/oder physikalische Veräderungen erfolgen. Beispielsweise können die Copolymeren härten und/oder Wasser oder Lösungsmittel entfernt werden.

Die vorliegende Erfindung betrifft weiterhin brandgeschützte Halbzeuge und Fertigteile, die dadurch gekennzeichnet sind, daß sie Aluminiumhydroxid, natürliches und/oder naturänliches Calciumborat, Copolymere des Ethylens mit Acrylaten oder Vinylestern und gegebenenfalls Hilfsstoffe enthalten oder daraus bestehen. Bei derartigen Halbzeugen und Fertigteilen kann es sich beispielsweise um Kunststoffhalbzeuge und -fertigteile, Beschichtungen, Kitte, Preßmassen, Gießmassen, Zemente, Lackbindemittel, Konstruktionselemente, Formteile oder Hohlraumfüllungen handeln. Die erfindungsgemäß vorhandenen Komponenten können nach Art und Menge so sein wie oben detailliert beschrieben.

Derartige Halbzeuge und Fertigteile können gegebenenfalls zusätzlich zu den erfindungsgemäßen Komponenten weitere, an sich bekannte Komponenten enthalten. Sie können die erfindungsgemäß vorhandenen Komponenten auch nur an bestimmten Stellen enthalten, z.B. an der Oberfläche oder an Durchbrüchen.

Die erfindungsgemäßen Brandschutzmittel, sowie die erfindungsgemäßen Halbzeuge und Fertigteile zeichnen sich dadurch aus, daß sie grundsätzlich und speziell auch im Temperaturbereich von ca. 750 bis 1.000°C gut keramisierende oder sinternde Glührückstände ergeben, die eine gute Schulzwirkung gegen (weitere) Beflammung und Löschwasser bewirken.

## Beispiele

Im folgenden wird der Erfindungsgegenstand beispielhaft erläutert. Die angegebenen Teile und Prozente beziehen sich auf das Gewicht, sofern nichts anderes angegeben ist.

## Beispiel 1

100 Teile eines Ethylen-vinylacetat-copolymers mit einem Vinylacetatgehalt von 45%. (Lewapren® 450-Bayer AG) wurden mit 170 Teilen Aluminiumhydroxid (Apyral® B2 der Bayer AG, Korngrößenbereich 15 bis 25 μm) und getrennt jeweils mit 170 Teilen der folgenden Minerale auf einer unbeheizten Walze vermischt: Kreide, Dolomit, Gips, Holzmehl, Schwerspat, Ruß, Kaolin, Schiefermehl, Mergel, Eisenoxid, Talkum, Flugasche, Wolastonit, Zinkoxid, Borocalcit und Colemanit.

Es wurde jeweils ein 5 mm dickes Fell hergestellt. Aus diesem Fell wurden Streifen der Größe 10 ×1 cm geschnitten. Diese wurden in einem Muffelofen gelegt und dort von Raumtemperatur auf 950°C unter Luftzutritt erhitzt und 30 Minuten bei 950°C belassen. Danach wurde abgekühlt.

Nach dem Abkühlen hatten sich nur bei den Borocalcit und Colemanit enthaltenden Streifen ein annähernd formtreuer und durch Sinterprozesse verfestigter keramikartiger Glührückstand gebildet. Die anderen Streifen, die Kreide, Dolomit, Gips, Holzmehl, Schwerspat, Ruß, Kaolin, Schiefermehl, Mergel, Eisenoxid, Talkum, Flugasche, Wolastonit und Zinkoxid enthielten, waren zerfallen oder hatten einen mechanisch instabilen, pulvrigen Glührückstand ergeben.

Das bedeutet, daß im Falle einer Fugenabdichtung oder Kabelumhüllung mittels einer diesen Streifen entsprechenden Zusammensetzung nur die Calciumborat/Aluminiumhydroxid-Kombination einen ausreichenden Schutz gegen den Flammenangriff bietet.

### Beispiel 2

Ein Copolymerisat aus Ethylen und 35% Ethylacrylat wurde mit der 1,5 fachen Menge Diphenyl-Kresyl-Phosphat vermischt. Auf 100 Teile dieser Mischung wurden in einem Knetwerk 400 Teile einer durch gemeinsames Vermahlen in einer Kugelmühle hergestellten Mischung von 40 Teilen Pandermit und 60 Teilen Aluminiumhydroxid eingearbeitet. Es wurde eine zähe Kittmasse erhalten. Ein aus dieser Kittmasse hergestellter Strang von 1 cm Breite und Höhe und 10 cm Länge wurde 1 Stunde lang auf 1.000°C im Muffelofen erhitzt. Es hinterblieb ein keramisiertes, poröses, mechanisch stabiles Abbild des ursprünglichen Stranges.

### Beispiel 3

100 Teile eines Ethylen-vinylacetat-copolymers mit einem Estergehalt von 35% wurden mit 150 Teilen Trioctylphosphat und 900 Teilen einer Mischung aus 60% Hydroboracit, 40% Aluminiumhydroxid und 3 Teilen pyrogener Kieselsäure verknetet. Es wurde eine kartuschengängige Kittmasse erhalten. Ein Strang dieser für Fugenverschlüsse geeigneten Kittmasse wurde im Muffelofen 30 Minuten unter Luftzutritt auf 950°C erhitzt. Nach dem Abkühlen lag der ehemals flexible Strang als fester Sinterkörper vor.

In den folgenden Beispielen wurde eine Colemanit-Type verwendet, die 9% Calciumcarbonat als Verunreinigung enthielt.

### Beispiel 4

100 Teile eines 50%igen Latex eines Ethylen-vinylacetat-copolymers mit 50% Vinylacetatgehalt wurden mit einem Teil Carboxymethylcellulose, 10 Teilen Trioctylphosphat, 20 Teilen Aluminosilikathohlperlen (mittlere Korngröße 250 µm), 120 Teilen Aluminiumhydroxid, 150 Teilen Colemanit, einem Teil pyrogener Kieselsäure und einem Teil Calcium-Silikat-Whiskern verknetet. Die so hergestellte Fugenverschlußpaste war kartuschengängig. Ein Strang dieser Paste ergab nach dem Trocknen und Tempern bei 1.000°C einen festen Sinterkörper. Diese Paste oder deren Verdünnungen mit Wasser eignen sich gut zum Beschichten oder Imprägnieren von Schaumstoffen gegen Feuereinwirkung.

### Beispiel 5

100 Teile des Copolymers wie in Beispiel 1 verwendet, wurden mit 350 Teilen einer Mischung aus 55% Colemanit und 45% Aluminiumhydroxid verknetet. Auf einem Walzenstuhl wurde aus diesem Material ein 3 mm dickes Fell hergestellt. Durch Aufwalzen bei 80°C wurde dieses Fell beidseitig mit einer Papierbahn haftend versehen. Aus dem papierkaschierten Material wurden 10 cm breite und 2 m lange Streifen geschnitten und als Binden um ein Elektrokabel gewickelt. Bei der Beflammung des so geschützten Kabels mit einem Temperaturen von etwa 1.100°C erreichenden Erdgasbrenner begann nach Abbrennen der äußeren Papierschicht ein gewisses Aufblähen des Materials der Schutzbinde unter gleichzeitiger Verkohlung und anschließender Keramisierung. Das Kabel wurde gegen den Flammenangriff wirkungsvoll geschützt. Bei zweilagiger Binde wurde nach 120 Minuten Beflammung noch kein Kurzschluß festgestellt.

### Beispiel 6

Jeweils 100 Teile des auch in Beispiel 1 verwendeten Polymerisates wurden mit 300 Teilen Kreide, 300 Teilen Gips, 300 Teilen Schwerspat, 300 Teilen Aluminiumhydroxid und einem Gemisch aus 150 Teilen Aluminiumhydroxid und 150 Teilen Colemanit verknetet. Aus den verkneteten Mischungen wurden 0,5 cm dicke Felle gezogen, wobei wie beim Einmischen der festen Bestandteile in das Polymerisat ein ungeheizter Walzenstuhl verwendet wurde.

Aus den Fellen wurden 1 cm breite Teststreifen geschnitten. Diese wurden so auf ein 1,5 mm starkes Eisenblech gelegt, daß die Streifen 1 cm weit über den Rand des Bleches hinausstanden. Dann wurde ein Bunsenbrenner unter das Blech an die Stelle gebracht, wo die Teststreifen das Blech überragten und Blech und Teststreifen gleichermaßen mit dem blauen Innenkegel der Bunsenflamme (ca. 1.100°C) beaufschlagt.

Nach 1 Minute Beflammung wurde der Bunsenbrenner entfernt. Es zeigte sich, daß alle Teststreifen weiterbrannten, bis auf diejenigen die Aluminiumhydroxid und das Alumhydroxid/Colemanit-Gemisch enthielten. Diese beiden letztgenannten Streifen verlöschten. Von diesen beiden Streifen lieferte jedoch nur derjenige einen festen Sinterkörper, der mit Aluminiumhydroxid und Colemanit versetzt worden war.

### Beispiel 7

100 Teile des Polymerisates wie in Beispiel 1 verwendet, 30 Teile des Polyesters wie in Beispiel 8 verwendet und 500 Teile einer Mischung aus 55% Colemanit und 45% Aluminiumhydroxid wurden auf einer unbeheizten Walze gemischt und das Gemisch granuliert. Das Granulat wurde in einen bei 80°C arbeitenden Extruder gegeben und über eine auf 110°C beheizte

a) Runddüse als Strang von 0,5 cm Durchmesser und

b) Flachprofildüse als Band von 5 mm Dicke und 5 cm Breite ausgetragen.

Das Rund- und das Flachprofil dienten zum Umwickeln von vor Beflammung zu schützenden Rohren und Kabeln. Sie können auch zum Verschluß von Fugen verwendet werden.

Außerdem wurde das wie oben beschrieben hergestellte Granulat bei 110°C durch eine Schneckenspritzgußmaschine zur Herstellung von Verschlußstopfen in der Form handelsüblicher Gummistopfen verarbeitet. Nach dem Entformen wurden die konischen Stopfen, deren Verhältnis von größtem Durchmesser zu Höhe 1 : 1 betrug, zum feuersicherem Verschluß von Kabelöffnungen im Kabelschotts verwendet. In der Prüfung auf Feuerwiderstandsdauer gemäß DIN 4102 ergaben solche Stopfen in der Gasbetonwand Feuerwiderstandsdauern von über 120 Minuten. Durchlochte Stopfen dieser Art können als gasdichte und feuchtigkeitsdichte Kabeldurchführungen verwendet werden.

Beispiel 8

100 Teile Polymerisat wie in Beispiel 1 verwendet, 100 Teile eines Polyesters aus Adipinsäure und Ethylenglykol, Pentaerythrit und Glycerin (OH-Zahl 157, Viskosität bei 74°C, 4.500 mPa's) sowie 600 Teile eines Gemisches aus 35% Aluminiumhydroxid, 10% Magnesiumhydroxid und 55% Colemanit wurden auf einer unbeheizten Walze gemischt. Es entstand eine elastische Kittmasse. Diese Kittmasse wurde als Beschichtung auf ein Glasfasergewebe aufgewalzt, das zur Abdeckung von Kabeln und Kabelkanälen gegen Brandeinwirkung diente. Ein 0,5 cm breiter Streifen dieses Kittes keramisierte bei Beflammung unter leichtem Aufblähen ohne bei Entfernung der Flammung nachzubrennen. Es wurden nur geringe Mengen von Rauch beobachtet, es entstand kein Ruß.

Beispiel 9

10 Teile des in Beispiel 1 verwendeten Polymerisats und 10 Teile des in Beispiel 8 verwendeten Polyesters wurden in einem Kneter bei Raumtemperatur mit 60 Teilen einer Mischung aus gleichen Teilen Colemanit und Aluminiumhydroxid vermischt. Dieses Gemisch wurde auf der unbeheizten Walze in einer Dicke von 2,5 mm auf ein Baumwollgewebe aufkaschiert. Nach Durchlaufen einer mit einer Heiztemperatur von 120°C betriebenen Heizstrecke mit einer Verweilzeit von 15 Sekunden und anschließender Abkühlung wurde das kaschierte Baumwollgewebe aufgewickelt. Es verklebte nicht. Derartig ausgerüstete Gewebe können zum Schutz von Kabeln, Rohrleitungen und Öffnungen gegen Flammendurchtritt verwendet werden, wie aus folgender Überprüfung hervorgeht :

Aus der zu der Beschichtung verwendeten Mischung wurde eine Probe mit 3 cm Durchmesser und 5 mm Dicke geschnitten, im Muffelofen auf 940°C erhitzt und nach 30 Minuten dem Muffelofen entnommen. Es wurde ein keramisiertes, poröses Materialstück erhalten, das etwa das doppelte Volumen gegenüber dem Zustand vor dem Erhitzen zeigte. Das bedeutet, das mit derartigem Material verschlossene Schlitze und Öffnungen auch im Brandfall den Raumabschluß ohne Volumenverlust sicher gewährleisten.

Beispiel 10

In einer handelsüblichen, halogenfreien Mischung zur Herstellung von Kabelmänteln auf der Basis eines Ethylen-vinyacetat-copolymer (Levapren® 450 der Bayer AG) in der auf 100 Teile des Polymers neben Stellmitteln und Vulkanisationshilfsmitteln 190 Teile Aluminiumhydroxid enthalten waren, wurden 100 Teile des enthaltenen Aluminiumhydroxids durch Pandermit ersetzt, der auf eine Korngröße von 1 bis 2 μm vermahlen worden war. Diese Mischung zur Herstellung eines Kabelmantels wurde gemäß dem Stand der Technik gemischt und vulkanisiert, nachdem sie zu Verschlußplatten von 0,5 × 25 × 25 cm verpreßt worden war. Diese Verschlußplatten dienten zur Abdeckung von Kabeldurchführungen, die Kabel wurden nach Lochung hindurchgeführt.

Im Beflammungstest, bei dem 1.000°C nach 60 Minuten erreicht wurden, sinterte das Plattenmaterial nach Aufblähung auf 160 Vol-% zu einem mechanisch festen Sinterkörper mit keramischen Klang. Bei der Beaufschlagung mit einer Flamme und 2minütiger Beflammung brannte das Material nach Entfernen der Brennerflamme nicht nach.

**Ansprüche**

1. Aluminiumhydroxid enthaltendes Brandschutzmittel, dadurch gekennzeichnet, daß es außerdem natürliches und/oder naturähnliches Calciumborat und Copolymere des Ethylens mit Acrylaten oder Vinylestern enthält.

2. Brandschutzmittel nach Anspruch 1, dadurch gekennzeichnet, daß es Al(OH)$_3$, dessen Hydrate, partiell dehydratisierte Typen und/oder Aluminiumoxidhydrat enthält.

3. Brandschutzmittel nach Ansprüchen 1 und 2, dadurch gekennzeichnet, daß es als natürliche Calciumborate solche enthält, die außer Bor, Calcium, Sauerstoff und gegebenenfalls Kristallwasser keine weiteren Bestandteile enthalten.

4. Brandschutzmittel gemäß Ansprüchen 1 bis 2, dadurch gekennzeichnet, daß sie als natürliche Calciumborate solche enthalten, die neben Bor, Calcium, Sauerstoff und gegebenenfalls Kristallwasser noch weitere Bestandteile enthalten.

5. Brandschutzmittel gemäß Ansprüchen 1 bis 2, dadurch gekennzeichnet, daß sie als naturähnliche Calciumborate aufbereitete natürliche Calciumborate enthalten.

6. Brandschutzmittel gemäß Ansprüchen 1 bis 2, dadurch gekennzeichnet, daß man als Ca-Borate solche verwendet, die in der Lage sind bei Temperaturen über 100°C Wasser abzuspalten.

7. Brandschutzmittel gemäß Ansprüchen 1 bis 6, dadurch gekennzeichnet, daß sie bezogen auf das Gewicht von Aluminiumhydroxid + Calciumborat 25 bis 70 Gew.-% Aluminiumhydroxid enthalten.

8. Brandschutzmittel nach Ansprüchen 1 bis 7, dadurch gekennzeichnet, daß sie zusätzlich einen oder mehrere Hilfsstoffe enthalten.

9. Verfahren zur Herstellung von Brandschutzmitteln, dadurch gekennzeichnet, daß man Aluminiumhydroxid, natürliches und/oder naturähnliches Calciumborat, Copolymere des Ethylens mit Acrylaten oder Vinylestern und gegebenenfalls Hilfsstoffe miteinander vermischt.

10. Brandgeschützte Halbzeuge und Fertigteile, dadurch gekennzeichnet, daß sie Aluminiumhydroxid, natürliches und/oder naturähnliches Calciumborat, Copolymere des Ethylens mit Acrylaten oder Vinylestern und gegebenenfalls Hilfsstoffe enthalten oder daraus bestehen.

## Claims

1. Fire protectant containing aluminium hydroxide, characterised in that it additionally contains natural and/or nearly natural calcium borate and copolymers of ethylene with acrylates or vinyl esters.

2. Fire protectant according to Claim 1, characterised in that it contains $Al(OH)_3$, its hydrates, partially dehydrated types and/or aluminium oxide hydrate.

3. Fire protectant according to Claims 1 and 2, characterised in that it contains as natural calcium borates those which contain no further constituents in addition to boron, calcium, oxygen and, if appropriate, water of crystallisation.

4. Fire protectants according to Claims 1 to 2, characterised in that they contain as natural calcium borates those which contain further constituents in addition to boron, calcium, oxygen and, if appropriate, water of crystallisation.

5. Fire protectants according to Claims 1 to 2, characterised in that they contain naturally prepared calcium borates as nearly natural calcium borates.

6. Fire protectants according to Claims 1 to 2, characterised in that as Ca borates those are used which are able to eliminate water at temperatures above 100°C.

7. Fire protectants according to Claims 1 to 6, characterised in that they contain 25 to 70% by weight of aluminium hydroxide, relative to the weight of aluminium hydroxide + calcium borate.

8. Fire protectants according to Claims 1 to 7, characterised in that they additionally contain one or more auxiliaries.

9. Process for the production of fire protectants, characterised in that aluminium hydroxide, natural and/or nearly natural calcium borate, copolymers of ethylene with acrylates or vinyl esters and, if appropriate, auxiliaries are mixed with one another.

10. Fire-protected semifinished goods and finished parts, characterised in that they contain aluminium hydroxide, natural and/or nearly natural calcium borate, copolymers of ethylene with acrylates or vinyl esters and, if appropriate, auxiliaries, or consist thereof.

## Revendications

1. Agent d'ignifugation contenant de l'hydroxyde d'aluminium, caractérisé en ce qu'il contient en outre du borate de calcium naturel et/ou analogue au borate naturel et des copolymères de l'éthylène avec des acrylates ou des esters vinyliques.

2. Agent d'ignifugation selon la revendication 1, caractérisé en ce qu'il contient du $Al(OH)_3$, ses hydrates, des types partiellement déshydratés et/ou de l'oxyhydrate d'aluminium.

3. Agent d'ignifugation selon les revendications 1 et 2, caractérisé en ce qu'il contient comme borates de calcium naturels ceux qui ne contiennent pas d'autres constituants que le bore, le calcium, l'oxygène et, éventuellement, l'eau de cristallisation.

4. Agent d'ignifugation selon les revendications 1 et 2, caractérisé en ce qu'il contient comme borates de calcium naturels ceux qui contiennent encore d'autres constituants que le bore, le calcium, l'oxygène et éventuellement l'eau de cristallisation.

5. Agent d'ignifugation selon les revendications 1 et 2, caractérisé en ce qu'il contient comme borates de calcium analogues aux borates naturels des borates de calcium naturels traités.

6. Agent d'ignifugation selon les revendications 1 et 2, caractérisé en ce que l'on utilise comme borates de calcium ceux qui perdent de l'eau à des températures supérieures à 100°C.

7. Agent d'ignifugation selon les revendications 1 à 6, caractérisé en ce qu'il contient de 25 à 70% en poids d'hydroxyde d'aluminium rapportés au poids de l'hydroxyde d'aluminium + borate de calcium.

8. Agent d'ignifugation selon les revendications 1 à 7, caractérisé en ce qu'il contient en outre un ou plusieurs adjuvants.

9. Procédé de production d'agents d'ignifugation caractérisé en ce qu'on mélange ensemble de l'hydroxyde d'aluminium, du borate de calcium naturel et/ou analogue au borate naturel, des copolymères de l'éthylène avec des acrylates ou des esters vinyliques et, éventuellement, des adjuvants.

10. Demi-produits et éléments préfabriqués ignifugés, caractérisés en ce qu'ils contiennent de l'hydroxyde d'aluminium, du borate de calcium naturel et/ou analogue au borate naturel, des copolymères de l'éthylène avec des acrylates ou des esters vinyliques et, éventuellement, des adjuvants, ou qui sont constitués de ces produits.